# EUROPEAN PATENT SPECIFICATION

(11) **EP 3 353 757 B1**
(45) Date of publication and mention of the grant of the patent: **08.07.2020**
(21) Application number: 16781297.3
(22) Date of filing: 20.09.2016
(51) Int. Cl.: G08B 21/22, G06Q 50/26

(54) **SYSTEM AND METHOD FOR TRACKING THE LOCATION AND ACTIVITIES OF PERSONS**
SYSTEM ZUR VERFOLGUNG DES STANDORTES UND DER AKTIVITÄTEN VON PERSONEN
SYSTÈME ET PROCÉDÉ POUR LOCALISER L'EMPLACEMENT ET LES ACTIVITÉS DE PERSONNES

(30) Priority: 21.09.2015 BE 201500226
(43) Date of publication of application: 01.08.2018
(73) Proprietor: ACTIFINE NV, 3600 Genk (BE)
(72) Inventor: BRANS, Tim, 3600 Genk (BE)
(74) Representative: IPLodge bv
(86) International application number: PCT/EP2016/072330
(87) International publication number: WO 2017/050778

(56) References cited:
- WO-A1-2015/145326
- WO-A2-2008/008667
- US-A- 5 525 967
- US-A1- 2009 184 823

## Description

### FIELD OF THE INVENTION

This invention relates to a system for tracking the activities and locations of persons such as prisoners, persons under house arrest or persons who have to perform community service.

### BACKGROUND OF THE INVENTION

Monitoring the location of persons is known in the art and used, inter alia, by law enforcement and in hospitals. These systems are limited to monitoring the location of one or more persons, usually for the purpose of physically confining an individual to a designated area, or for the purpose of monitoring a particular medical parameter, such as the heart rate, of an individual at a known position, e.g. see EP 0 357 309 A2.

The known systems for tracking of prisoners make use of an anklet device or a bracelet. Such an anklet or bracelet comprises a sensor, such as a GPS (Global Positioning System) sensor, for determining the position. Herewith it is possible to track the position of the prisoner or the person under house arrest. An anklet works together with an apparatus connected to the telephone(line) in the home of the prisoner. If the prisoner strays more than a specified distance from this apparatus, a central office will be automatically contacted, or, the apparatus may be interrogated about the presence or absence of the prisoner by the central office at regular intervals.

It is also already known to oblige prisoners with an anklet to perform community service at institutions and/or organizations such as for example in nonprofit organizations. A disadvantage is that the obligatory task performed by the person with an anklet is not registered using the anklet. Such an organization or institution is thus obliged to assign one or more supervisory persons in order to check and control the activities of the required task. Furthermore, it is also not possible to have one or more persons with an anklet or groups of persons with anklets perform specific tasks and assignments along a predetermined route without being accompanied by one or more supervisory persons.

A further disadvantage is that supervisory persons are not able remotely, for example at a central office, to track, manage and eventually update the activities, tasks and execution of these tasks by persons with an anklet.

United States patent application publication no. US 2009/184823 A1, entitled "Systems and methods for detecting activities", discloses using one or more items of context information on one or more objects to detect an activity. This document does not disclose that a relative position of a tool with respect to a person is registered, nor that a relative position measurement is combined with a process of determining a position of said person, nor associating users and tools to be tracked by making a physical contact between the users' wearable devices and the tools.

International patent application publication no. WO 2013/082197 A2, entitled "Managing information at a construction site", discloses receiving task data from a handheld tool at a construction site to generate a report. This document does not disclose that a relative position of a tool with respect to a person is registered, nor that a relative position measurement is combined with a process of determining a position of said person, nor associating users and tools to be tracked by making a physical contact between the users' wearable devices and the tools.

United States patent application publication no. US 2009/232366 A1, entitled "System and method for factory work logging", discloses a server keeping work record including information that associates a tag identifier recorded in the server in advance with a location on paper. This document does not disclose that a relative position of a tool with respect to a person is registered, nor that a relative position measurement is combined with a process of determining a position of said person, nor associating users and tools to be tracked by making a physical contact between the users' wearable devices and the tools.

International patent application no. PCT/IB2015/052103, published after the priority date of the present application as WO 2015/145326 A1 and assigned to the present applicant, describes a system for managing and tracking the activities and tasks of one or more persons, wherein each person wears an anklet, bracelet or wristlet comprising a sensor for determining the position of that person, characterized by (a) one or more tools associated with each person, wherein these one or more tools each comprise sensors to determine the relative position of each tool with respect to the person with the anklet or bracelet, such that the activities of each person are registered, (b) a central server for storing, tracking and managing of the position of each person in combination with the activity data of this person. This document does not describe associating users and tools to be tracked by making a physical contact between the users' wearable devices and the tools.

### SUMMARY OF THE INVENTION

It is an object of the present invention to remotely track and manage activities and tasks of persons with an anklet, bracelet or wristlet during the execution of a task.

According to an aspect of the present invention, there is provided a system for managing and tracking the activities and tasks of one or more persons, according to claim 1.

An advantage of the invention is that the activities, tasks and execution of the tasks by the prisoners can be tracked and managed at a central location, such as at a government office or at a police station. These tasks or activities may be remotely changed: either immediately or when a prisoner has covered a certain distance or when part of a task has been completed.

A further advantage is that the number of supervisory persons from government or from organizations can be substantially reduced or are even no longer necessary. A further advantage is that the obligatory task no longer needs to be executed at an organization. The prisoner with an anklet can be sent out to perform certain tasks along a specific path, along a defined route or in an imposed zone. These activities and tasks can be tracked and managed centrally. Also the position, location or area where these activities and tasks have to be executed, can be changed, monitored and managed at a central location.

A further advantage is that, when a prisoner with an anklet has to execute a task using tools and/or equipment, the location of these tool(s) and/or equipment, the relative position of these tool(s) and/or equipment with regard to the anklet and specific movements of these tool(s) and/or equipment can be registered in combination with data of the anklet, such as the position of the prisoner. Therefore, one or more sensors are attached to the tool(s) to be used and/or to the equipment to be used, such as for example to a brush and to a wheelbarrow.

A further advantage is that a specific task or activity can be recognized using pattern recognition. For example, the movement of a paintbrush can be stored, recognized using pattern recognition technology and compared with the assigned paint task, for example the removal of graffiti under a bridge.

A further advantage is that all activities and tasks are recorded in detail. As such, judges, police and assisting staff are provided with a detailed overview of the execution of the task and the activity at defined positions by each person with an anklet who has to perform community service.

A further advantage is that the required location information is gathered in a particularly efficient manner, as a result of the combination of tracking the absolute location of the moving persons (by means of their anklet, bracelet or wristlet), and the relative positions of the tools associated with these persons (by means of their sensors).

The contact-based association between a person and a given tool may be registered in the server, to allow correct interpretation of the relative position data of the tools. The association between a person and a given tool may be temporary (requiring periodic renewal).

In an embodiment of the system according to the present invention, the associating comprises performing a mutual authentication.

It is an advantage of this embodiment that the permitted associations between persons and tools can be specified in advance, and checked during the association stage. The mutual authentication protocol may rely on public key cryptography, and may in particular comprise the exchange of public keys (preferably as part of a public key certificate). These public keys may then be used to verify the correctness of a signed or encrypted response provided by one party to a challenge provided by the other party. A further key exchange and/or authentication may also take place between the anklet, bracelet or wristlet on the one hand and the server on the other hand, and/or between the tool on the one hand and the server on the other hand.

The system according to the present invention is further configured to start the determining of the relative position of each tool upon the associating.

This feature of the invention is based *inter alia* on the insight of the inventor that by performing an association between a person and a tool upon making a contact between both, the sensing of the relative position of the tool has a reliable point of origin. In this way, the determining of the position becomes more accurate. In an embodiment of the system according to the present invention, transmissions between the server, the anklet, bracelet, or wristlet, and the tool are encrypted.

In situations where cryptographic keys associated with the various elements in the present system are available, for example as a result of a preliminary key exchange, it is advantageous to secure transmissions between these elements by means of encryption. The use of encryption may provide security against eavesdropping and some impersonation scenarios.

In an embodiment of the system according to the present invention the position and motion of each tool is also registered.

This embodiment permits more accurate analysis after the registration.

In an embodiment of the system according to the present invention, the relative position is determined using deduced reckoning (dead reckoning).

It is an advantage of this embodiment that it does not require continued connectivity between the point of origin (person) and the tool.

In an embodiment of the system according to the present invention, the central server comprises a pattern recognition function, which recognizes and stores the activity data of each person.

It is an advantage of this embodiment that useful activity information, derived from the raw position data, is made available to the system supervisor.

In an embodiment of the system according to the present invention, the attitude of the one or more tools is determined and sent to the central server.

It is an advantage of this embodiment that different types of use of the tools can be more accurately discriminated on the basis of the received data.

In an embodiment of the system according to the present invention, the measurements of the one or more sensors in the tool and/or anklet, bracelet or wristlet are combined (sensor fusion) and filtered using one or more Kalman filters.

It is an advantage of this embodiment that noise, which renders the analysis of the measured data more difficult, is removed from the useful signals.

According to an aspect of the present invention, there is provided a use of the system described above for tracking and managing activities and tasks of prisoners or of persons who have to perform community service.

It is an advantage of this embodiment that as prisoners and people convicted to community service can be made to wear an anklet by judicial order, they can easily be subjected to this very efficient form of remote monitoring, reducing the need for on-site supervision.

According to an aspect of the present invention, there is provided a method for managing and tracking activities and tasks of one or more persons according to claim 10.

In an embodiment of the method according to the present invention, the associating comprises performing a mutual authentication.

According to the present invention, the determining of the relative position of each tool is started upon the associating.

In an embodiment of the method according to the present invention, transmissions between the server, the anklet, bracelet, or wristlet, and the tool are encrypted.

In an embodiment of the method according to the present invention, the position and motion of the one or more tools associate with each person are also registered.

In an embodiment of the method according to the present invention, the relative position is determined using deduced reckoning (dead reckoning).

In an embodiment of the method according to the present invention, pattern recognition is applied on the activity data in order to recognize activities.

In an embodiment of the method according to the present invention, the attitude of the one or more tools is determined and sent to the central server.

In an embodiment of the method according to the present invention, the measurements of the one or more sensors in the tools and/or anklet, bracelet or wristlet are combined (sensor fusion) and filtered using one or more Kalman filters.

According to an aspect of the present invention, there is provided a use of the method described above for tracking and managing activities and tasks of prisoners or of persons who have to perform community service.

The technical effects and advantages of embodiments of the method according to the present invention correspond, *mutatis mutandis,* to those of the corresponding embodiments of the system according to the present invention.

### BRIEF DESCRIPTION OF THE FIGURES

These and other features and advantages of embodiments of the present invention will now be described in more detail with reference to the accompanying figure, wherein:
Figure 1 schematically represents a system according to an embodiment of the present invention; and
Figure 2 represents a flow chart of a method according to an embodiment of the present invention.

### DETAILED DESCRIPTION OF THE INVENTION

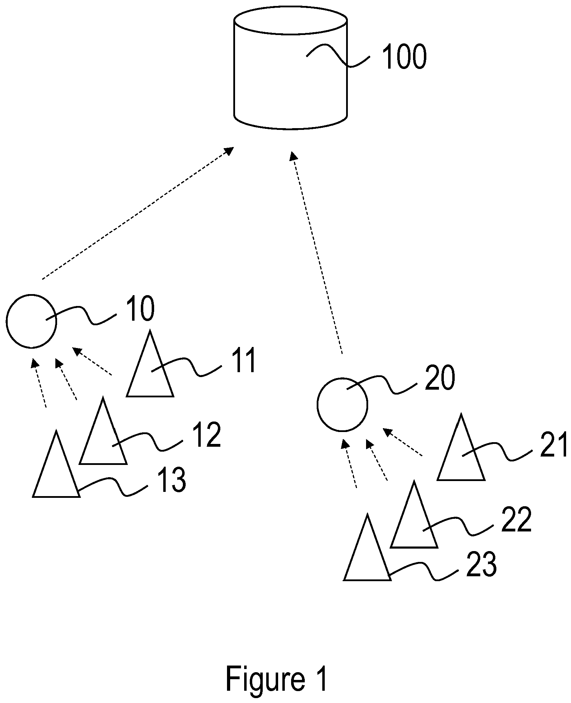

An exemplary system according to the present invention is shown schematically in Figure 1. A central server **100** is configured to perform activity registration and monitoring. Without loss of generality, two persons to be tracked **10, 20** are schematically illustrated. Also without loss of generality, a set of three tools **11, 12, 13** is associated with the first person to be tracked **10,** and another set of three tools **21, 22, 23** is associated with the second person to be tracked **20.** The position of each of the tools associated with each person is determined relative to said person; thus arrows representing localization and communication between the tools **11, 12, 13** and the first person **10** (in particular that person's wearable device, e.g. his or her anklet) are shown, and arrows representing localization and communication between the tools **21, 22, 23** and the second person **20** (in particular that person's wearable device, e.g. his or her anklet) are also shown. The position of the persons **10, 20,** and the relative positions of the tools associated with each of them are communicated to the server **100,** as is also represented by arrows.

A typical example of the invention relates to cleaning of streets along specific routes by one or more (groups of) prisoners with an anklet, or by one or more (groups of) persons **10, 20** who have to execute an obligatory task. An anklet comprising a GPS sensor or a bracelet comprising a GPS sensor is attached to each prisoner **10, 20.** The anklet or the bracelet can also comprise other sensors, such as one or more motion sensors, gyroscope, compass, magnetometer, barometer, accelerometers, acceleration sensors, pressure sensor, weight sensors or heart rate sensor. Furthermore, each prisoner **10, 20** has to carry tools **11-13, 21-23** such as a brush and wheelbarrow. Each of these tools **11-13, 21-23** comprises one or more sensors with which the location of these tools, the relative position of these tools with regard to the anklet and the movement of these tools are registered. The position of the prisoner(s) **10, 20** in combination with the activity data of the tools **11-13, 21-23,** which the prisoner(s) use, are sent to a server **100** at a central location, such as for example a police station. The activity of the prisoner(s) **10. 20** can be immediately recognized using pattern recognition technology. This activity can be compared with the assigned task, for example sweeping or not sweeping during the assigned task. Furthermore, everything can be registered for subsequent follow up by judges, police, prison staff and/or assisting staff.

Each anklet can communicate with a display in for example a mobile phone or wristlet. The route along which the assigned task or tasks need to be executed is shown on this display. The tasks, routes and times at which these tasks are to be executed, can be stored in the anklet in advance. However, it is also possible that the central server sends the tasks, routes and times to the anklet or that the central server adjusts a predefined route, task or time. Each anklet will emit an alarm or show a message, if a prisoner diverges from the assigned route or if activities are not corresponding to the assigned tasks.

Each anklet comprises a sender/receiver to send sensor data to the central server and to receive tasks, routes and associated data from the central server. Moreover, each anklet comprises another sender/receiver to communicate with the sensor(s) in the tools that the prisoner requires to execute the task along the assigned route. The relative position of these tools with respect to the anklet and the movements of these tools may be determined in the anklet using a processor, in the tools using a processor or the calculation thereof can take place at the central server. The connection between central server, tool(s) and anklet(s) (or bracelet(s) or wristlet(s)) is preferably secured using encryption: accordingly, data, such as sensor data, position data and/or activity data, which is sent between server, tool(s) and anklet(s) (or bracelet(s) or wristlet(s)) is preferably encrypted.

The location / position of each anklet can be determined in different ways. Each anklet comprises for example a GPS sensor or another equivalent sensor, such as e.g. a Galileo or Glonass sensor. Or each anklet comprises a GSM/GPRS sender/receiver and the location/position is then determined using the cellular wireless telecommunications network. Or hybrid positioning is used, wherein the position of each anklet is determined using a combination of one or more of (A)GPS, GSM, GPRS, WLAN, beacons or anchors.

In addition to position coordinates (longitude and latitude), the GPS sensor in anklet and/or tool can also provide time and date using a RTC (real-time clock), altitude, speed, course and direction information. Altitude can also be determined using a barometer or barometric pressure sensor in the anklet and/or tool, optionally in combination with a temperature sensor (thermometer) provided in the anklet and/or tool. Furthermore, using the gyroscope in the anklet and/or tool, the attitude (pitch, yaw and roll; Euler angles) of the anklet and/or tool can be determined. The acceleration sensors or accelerometers in the anklet and/or tool provide acceleration measurements. Data from one or more of these sensors observed over time in the anklet and/or tool is combined (sensor fusion) and filtered using one or more adaptive filters (Kalman filter).

Every tool comprises a sender/receiver in order to communicate with an anklet and/or with the central server, and one or more sensors such as one or more motion sensors, gyroscope, compass, magnetometer, barometer, accelerometers, acceleration sensors, pressure sensor, weight sensors and optionally a GPS sensor. Sensor data can be stored in a buffer, in a memory and/or in a removable memory card (e.g. SD-card) in each tool and/or in each anklet. If a memory or a removable memory card is used, it's not always necessary to provide an anklet or bracelet with a sender/receiver in order to communicate with the central server. Tasks, routes and associated data will then be stored beforehand in the memory or in the memory card. Eventually the sender/receiver and the sensors can be mounted on a device that will be attached to or mounted to a tool.

The relative position of a tool with respect to an anklet or bracelet can for example be determined in the following manner: if both the anklet and the tool comprise an accelerometer, then the acceleration of both the anklet and the tool is measured in three dimensions. By performing a double integration (using a first integration of acceleration to velocity and then a second integration of velocity to position) the three-dimensional position of both the anklet and the tool can be calculated. Hereby gravity and the associated gravitational acceleration g have to be taken into account. From this the relative position of the tool with respect to the anklet can be calculated. Hereby it is necessary to start the acceleration measurements from a common starting point: in this case, when contact is made between tool and anklet. For example, when the anklet is tapped (touched) with the tool, the acceleration measurements start in both the anklet and the tool. There are different ways to measure contact between tool and anklet, e.g. with a pressure sensor (pressure sensitive resistor) in anklet and/or tool, with a magnetic sensor, with a hall effect sensor, with an ultrasound sensor, with an optocoupler or with an infrared IR sender/receiver, whereby signal strength is measured. Optionally, a simple switch on the anklet can be pressed using the tool in order to start the acceleration measurements. In order to recalibrate the calculations of the relative position, contact between the tool and the anklet may be repeated one or more times during the duration of a task.

In addition to starting acceleration measurements by making contact between tool and anklet, a cryptographic key exchange can take place between tool and anklet when contact is made between the tool and anklet. For example, when public-key cryptography is used, the public key of the anklet and the public key of the tool are exchanged during contact for encryption and/or authentication. As such, the tool and anklet are associated with each other. One or more other tools can also be associated with that anklet by performing contact between the one or more other tools and that anklet in a similar way, in addition to the relative position determination between said one or more tools and said anklet.

In a similar way the relative position of a tool with respect to a bracelet or wristlet can be determined.

A different way to determine the relative position of a tool with respect to an anklet, bracelet or wristlet, is to make use of dead reckoning (deduced reckoning).

The central server **100** is installed at a central secure location. Communication between anklets and the central server **100** and eventually between the tools **11-13, 21-23** and the central server **100** may happen via wireless communication (GSM, UMTS, 3G, 4G, satellite, low power wide area networks (LPWAN) such as Weightless, Sigfox or LoRa, or another wireless standard). The central server **100** manages the activities, tasks, routes and positions of the one or more (groups of) prisoners with an anklet. This central server **100** stores all data of each prisoner: sensor data of each anklet, sensor data of each tool, route information, activity information, task data, various information such as time and date. This central server **100** is not necessarily implemented as only a single central server, but can also be implemented in a distributed manner: database server, backup server, Internet server, intranet server, main server, etc.

The whole system can be managed at an activities and tasks center. In this center multiple workstations are installed for management tasks, such as the follow up of tasks and adapting routes and tasks for one or more prisoners.

A global overview can be shown on a map which is displayed on multiple displays or which is projected. The task and activity data of prisoner(s) is displayed on this map. Furthermore, judges, police and assisting staff are able to remotely consult this data. The storage, display and consulting of this data is secured using coding technology, such as encryption and authentication.

The tools **11-13, 21-23** and/or anklets can be stored in a kiosk. Upon reading the identity card of the prisoner or upon reading biometric data of the prisoner, the kiosk displays the task that the prisoner is obliged to execute and the kiosk provides an anklet and one or more tools. The task, routes and associated data can be stored in the memory of the anklet and/or tool(s). After the prisoner has executed the obliged task, the anklet and the tools have to be returned to the kiosk. In the kiosk the sensor- and activity data can be read from the memory or from the memory card. A kiosk comprises suitable battery recharging means and furthermore each kiosk is also able to send sensor data and activity data to the central server.

Sometimes it is difficult to determine the position using GPS, such as in an underground train or metro station, under a bridge or in a tunnel. If GPS reception and GPS data are not available, the last known position can be stored in the anklet or in the tool, for instance before entering such an environment. Activity data such as the relative position of tool(s) with respect to the anklet and motion data of the tool(s) can be determined in such environments and can be temporarily stored. Communicating with a central server is in such environments usually not possible and the sending of the data to the central server is than postponed until there is again contact with the central server possible.

Further examples of tasks relate to cleaning and/or clearing up of beaches and/or forests, festival sites, convention centers, airports, harbors, train stations, subway stations, etc. A further example of a task is the removal of graffiti.

While the examples described above refer to anklets in the context of forced activities (e.g., by prisoners of people convicted to community service), the skilled person will readily understand that the same function can be obtained in the same way with the same result by replacing the anklets by other wearable devices that can be attached to a person and that are tamper-proof. In this context, the requirement of being tamper-proof means that the wearable device cannot be removed by the person that is to be tracked, without such removal being noticed by the remote monitoring system. The functions provided out by the anklets in the above examples can also be provided by bracelets, wristlets or other wearables, which need not be tamper-proof in contexts where the activities to be performed are performed voluntarily but nevertheless require supervision or monitoring.

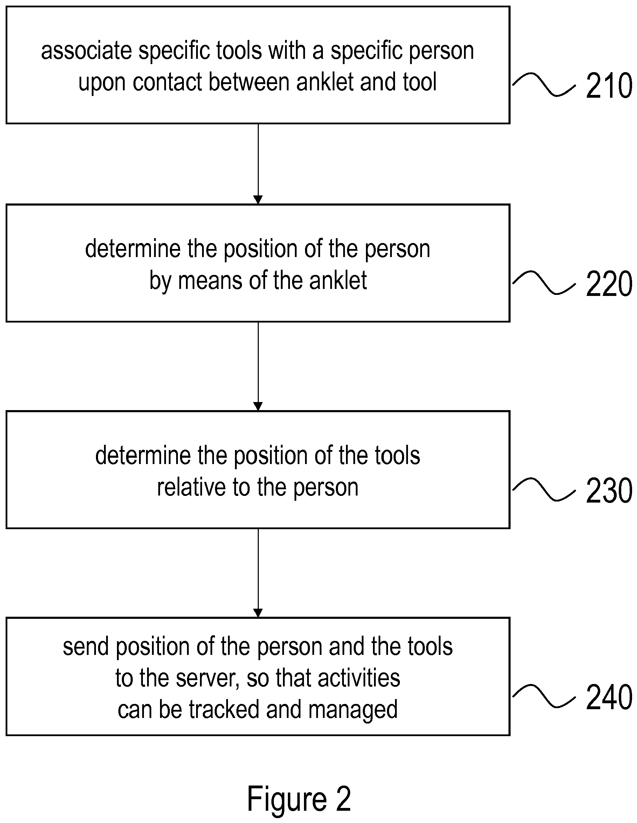

For further clarification, Figure 2 provides a flow chart of a method according to an embodiment of the present invention, for managing and tracking activities and tasks of one or more persons **10, 20** with an anklet, bracelet or wristlet, carried out by means of one or more tools **11-13, 21-23.** In a first step, a specific tool of said one or more tools is associated **210** with a specific person of said one or more persons when a contact is made between said specific tool and the anklet, bracelet or wristlet worn by said specific person. The position of said one or more persons **10, 20** with said respective anklet, bracelet or wristlet is determined **220.** The relative position of said one or more tools **11-13, 21-23** associated with each person with respect to this person is determined **230** in order to register the activity of each person. The position of each person in combination with the relative position of the tools used by this person is sent **240** to a central server **100,** so that the activities of this person are tracked and managed. While the steps **220, 230, 240** are shown in the flow chart as consecutive activities, it shall be understood that these may also happen on a continuous or intermittent basis and in a partly overlapping manner.

While the invention was described hereinabove with reference to specific examples, this was done to clarify and not to limit the invention, the scope of which is determined by the accompanying claims.

## Claims

1. A system for managing and tracking the activities and tasks of one or more persons (10, 20), wherein each person (10, 20) wears an anklet, bracelet or wristlet comprising a sensor for determining the position of that person, the system comprising:
a. one or more tools (11, 12, 13; 21, 22, 23) associated with each person (10, 20), wherein these one or more tools each comprise sensors to determine the relative position of each tool with respect to the person with the anklet, bracelet or wristlet, such that the activities of each person are registered,
b. a central server (100) for storing, tracking and managing of the position of each person (10, 20) in combination with the activity data of this person,
the system being configured to associate a specific tool of said one or more tools (11, 12, 13; 21, 22, 23) with a specific person of said one or more persons (10, 20) when a physical contact is made between said specific tool and the anklet, bracelet or wristlet worn by said specific person, wherein said system is further configured to start said determining of said relative position of each tool upon said associating.

2. The system according to claim 1, wherein said associating comprises performing a mutual authentication.

3. The system according to any of the preceding claims, wherein transmissions between the server, the anklet, bracelet, or wristlet, and the tool are encrypted.

4. The system according to any of the preceding claims, wherein the position and motion of each tool is also registered.

5. The system according to any of the preceding claims, wherein the relative position is determined using deduced reckoning (dead reckoning).

6. The system according to any of the preceding claims, wherein the central server comprises a pattern recognition function, which recognizes and stores the activity data of each person.

7. The system according to any of the previous claims, wherein the attitude of the one or more tools is determined and sent to the central server (100).

8. The system according to any of the previous claims, wherein the measurements of the one or more sensors in the tool and/or anklet, bracelet or wristlet are combined (sensor fusion) and filtered using one or more Kalman filters.

9. The use of the system as claimed in any of claims 1 to 8 for managing and tracking the activities and tasks of prisoners or of persons which have to perform community service.

10. A method for managing and tracking activities and tasks of one or more persons with an anklet, bracelet or wristlet, carried out by means of one or more tools, the method comprising:
a. associating (210) a specific tool of said one or more tools with a specific person of said one or more persons when a physical contact is made between said specific tool and the anklet, bracelet or wristlet worn by said specific person,
b. determining (220) the position of said one or more persons with said respective anklet, bracelet or wristlet,
c. determining (230) the relative position of said one or more tools associated with each person with respect to this person in order to register the activity of each person, and
d. sending (240) the position of each person in combination with the relative position of the tools used by this person to a central server, so that the activities of this person are tracked and managed,
wherein said determining (230) of said relative position of each tool is started upon said associating.

11. The method according to claim 10, wherein said associating (210) comprises performing a mutual authentication.

12. The method according to claim 10 or claim 11, wherein transmissions between the server, the anklet, bracelet, or wristlet, and the tool are encrypted.

13. The method according to any of claims 10 to 12, wherein the position and motion of the one or more tools associated with each person are also registered.

14. The method according to any of claims 10 to 13, wherein the relative position is determined (230) using deduced reckoning (dead reckoning).

15. The method according to any of claims 10 to 14, wherein pattern recognition is applied on the activity data in order to recognize activities.

16. The method as claimed in any of the previous claims 10 to 15, wherein the attitude of the one or more tools is determined and sent to the central server (100).

17. The method as claimed in any of the previous claims 10 to 16, wherein the measurements of the one or more sensors in the tool and/or anklet, bracelet or wristlet are combined (sensor fusion) and filtered using one or more Kalman filters.

18. The use of the method as claimed in any of claims 10 to 17 for tracking and managing activities and tasks of prisoners or of persons who have to perform community service.

## Patentansprüche

1. System zum Verwalten und Verfolgen der Aktivitäten und Aufgaben einer oder mehrerer Personen (10, 20), wobei jede Person (10, 20) eine Fußfessel, Handschelle oder ein Armband mit einem Sensor zum Bestimmen der Position der betreffenden Person trägt, wobei das System umfasst:
a. ein oder mehrere Instrumente (11, 12, 13; 21, 22, 23), die einer jeweiligen Person (10, 20) zugeordnet sind, wobei das eine oder die mehreren Instrumente jeweils Sensoren umfassen, um die relative Position des jeweiligen Instruments in Bezug auf die Person mit der Fußfessel, der Handschelle oder dem Armband dergestalt zu bestimmen, dass die Aktivitäten der jeweiligen Person registriert werden,
b. einen zentralen Server (100) zum Speichern, Verfolgen und Verwalten der Position jeder Person (10, 20) in Kombination mit den Aktivitätsdaten der betreffenden Person,
wobei das System dazu eingerichtet ist, ein spezifisches Instrument aus dem einen oder den mehreren Instrumenten (11, 12, 13; 21, 22, 23) mit einer spezifischen Person aus der einen oder den mehreren Personen (10, 20) zu verknüpfen, wenn ein physikalischer Kontakt zwischen dem spezifischen Instrument und der von der spezifischen Person getragenen Fußfessel, Handschelle oder dem von der spezifischen Person getragenen Armband erfolgt, wobei das System ferner dazu eingerichtet ist, das Bestimmen der relativen Position eines jeweiligen Instruments auf das Verknüpfen hin zu starten.

2. System nach Anspruch 1, wobei das Verknüpfen ein Durchführen einer gegenseitigen Authentisierung umfasst.

3. System nach einem der vorhergehenden Ansprüche, wobei Übertragungen zwischen dem Server, der Fußfessel, der Handschelle oder dem Armband und dem Instrument verschlüsselt sind.

4. System nach einem der vorhergehenden Ansprüche, wobei die Position und Bewegung eines jeweiligen Instruments ebenfalls registriert werden.

5. System nach einem der vorhergehenden Ansprüche, wobei die relative Position unter Verwendung von Koppelnavigation (Besteckrechnung) bestimmt wird.

6. System nach einem der vorhergehenden Ansprüche, wobei der zentrale Server eine Mustererkennungsfunktion umfasst, welche die Aktivitätsdaten jeder Person erkennt und speichert.

7. System nach einem der vorhergehenden Ansprüche, wobei die Stellung des einen oder der mehreren Instrumente bestimmt wird und an den zentralen Server (100) gesendet wird.

8. System nach einem der vorhergehenden Ansprüche, wobei die Messungen des einen oder der mehreren Sensoren in dem Instrument und/oder der Fußfessel, Handschelle oder dem Armband unter Verwendung eines oder mehrerer Kalman-Filter kombiniert (Sensorfusion) und gefiltert werden.

9. Verwendung des Systems nach einem der Ansprüche 1 bis 8 zum Verwalten und Verfolgen der Aktivitäten und Aufgaben von Gefangenen oder von Personen, welche gemeinnützige Arbeit abzuleisten haben.

10. Verfahren zum Verwalten und Verfolgen von Aktivitäten und Aufgaben von einer oder mehreren Personen mit einer Fußfessel, Handschelle oder einem Armband, ausgeführt mittels eines oder mehrerer Instrumente, wobei das Verfahren umfasst:
a. Verknüpfen (210) eines spezifischen Instruments aus dem einen oder den mehreren Instrumenten mit einer spezifischen Person aus der einen oder den mehreren Personen, wenn ein physikalischer Kontakt zwischen dem spezifischen Instrument und der von der spezifischen Person getragenen Fußfessel, Handschelle oder dem von der spezifischen Personen getragenen Armband erfolgt,
b. Bestimmen (220) der Position der einen oder mehreren Personen mit der jeweiligen Fußfessel, Handschelle oder dem jeweiligen Armband,
c. Bestimmen (230) der relativen Position des einen oder der mehreren mit einer jeweiligen Person verknüpften Instrumente in Bezug auf die betreffende Person, um die Aktivität jeder Person zu registrieren, und
d. Senden (240) der Position jeder Person in Kombination mit der relativen Position der von der betreffenden Person benutzten Instrumente an einen zentralen Server dergestalt, dass die Aktivitäten der betreffenden Person verfolgt und verwaltet werden,
wobei das Bestimmen (230) der relativen Position eines jeweiligen Instruments auf das Verknüpfen hin gestartet wird.

11. Verfahren nach Anspruch 10, wobei das Verknüpfen (210) ein Durchführen einer gegenseitigen Authentisierung umfasst.

12. Verfahren nach Anspruch 10 oder Anspruch 11, wobei Übertragungen zwischen dem Server, der Fußfessel, der Handschelle oder dem Armband und dem Instrument verschlüsselt sind.

13. Verfahren nach einem der Ansprüche 10 bis 12, wobei die Position und Bewegung des einen oder der mehreren Instrumente, die mit einer jeweiligen Person verknüpft sind, ebenfalls registriert werden.

14. Verfahren nach einem der Ansprüche 10 bis 13, wobei die relative Position unter Verwendung von Koppelnavigation (Besteckrechnung) bestimmt (230) wird.

15. Verfahren nach einem der Ansprüche 10 bis 14, wobei auf die Aktivitätsdaten Mustererkennung angewendet wird, um Aktivitäten zu erkennen.

16. Verfahren nach einem der vorhergehenden Ansprüche 10 bis 15, wobei die Haltung des einen oder der mehreren Instrumente bestimmt und an den zentralen Server (100) gesendet wird.

17. Verfahren nach einem der vorhergehenden Ansprüche 10 bis 16, wobei die Messungen des einen oder der mehreren Sensoren in dem Instrument und/oder der Fußfessel, Handschelle oder dem Armband unter Verwendung eines oder mehrerer Kalman-Filter kombiniert (Sensorfusion) und gefiltert werden.

18. Verwendung des Verfahrens nach einem der Ansprüche 10 bis 17 zum Verfolgen und Verwalten von Aktivitäten und Aufgaben von Gefangenen oder von Personen, welche gemeinnützige Arbeit abzuleisten haben.

## Revendications

1. Système pour gérer et suivre les activités et les tâches d'une ou plusieurs personnes (10, 20), dans lequel chaque personne (10, 20) porte un bracelet de cheville, un bracelet ou un bracelet de poignet comprenant un capteur pour déterminer la position de cette personne, le système comprenant :
a. un ou plusieurs outils (11, 12, 13 ; 21, 22, 23) associés à chaque personne (10, 20), dans lesquels ces un ou plusieurs outils comprennent chacun des capteurs pour déterminer la position relative de chaque outil par rapport à la personne avec le bracelet de cheville, le bracelet ou le bracelet de poignet, de sorte que les activités de chaque personne sont enregistrées,
b. un serveur central (100) pour stocker, suivre et gérer la position de chaque personne (10, 20) en combinaison avec les données d'activité de cette personne,
le système étant configuré pour associer un outil spécifique desdits un ou plusieurs outils (11, 12, 13 ; 21, 22, 23) à une personne spécifique desdites une ou plusieurs personnes (10, 20) quand un contact physique est établi entre ledit outil spécifique et le bracelet de cheville, le bracelet ou le bracelet de poignet porté par ladite personne spécifique, dans lequel ledit système est en outre configuré pour commencer ladite détermination de ladite position relative de chaque outil lors de ladite association.

2. Système selon la revendication 1, dans lequel ladite association comprend l'exécution d'une authentification mutuelle.

3. Système selon l'une quelconque des revendications précédentes, dans lequel des transmissions entre le serveur, le bracelet de cheville, le bracelet, ou le bracelet de poignet et l'outil sont chiffrées.

4. Système selon l'une quelconque des revendications précédentes, dans lequel la position et le mouvement de chaque outil sont également enregistrés.

5. Système selon l'une quelconque des revendications précédentes, dans lequel la position relative est déterminée en utilisant une estime déduite (navigation à l'estime).

6. Système selon l'une quelconque des revendications précédentes, dans lequel le serveur central comprend une fonction de reconnaissance de formes, qui reconnaît et stocke les données d'activité de chaque personne.

7. Système selon l'une quelconque des revendications précédentes, dans lequel l'attitude du ou des plusieurs outils est déterminée et envoyée au serveur central (100).

8. Système selon l'une quelconque des revendications précédentes, dans lequel les mesures du ou des plusieurs capteurs dans l'outil et/ou le bracelet de cheville, le bracelet ou le bracelet de poignet sont combinées (fusion des données des capteurs) et filtrées en utilisant un ou plusieurs filtres de Kalman.

9. Utilisation du système selon l'une quelconque des revendications 1 à 8, pour gérer et suivre les activités et les tâches de prisonniers ou de personnes qui doivent effectuer des travaux d'intérêt général.

10. Procédé pour gérer et suivre des activités et des tâches d'une ou plusieurs personnes avec un bracelet de cheville, un bracelet ou un bracelet de poignet, exécuté au moyen d'un ou plusieurs outils, le procédé comprenant :
a. l'association (210) d'un outil spécifique desdits un ou plusieurs outils à une personne spécifique desdites une ou plusieurs personnes quand un contact physique est établi entre ledit outil spécifique et le bracelet de cheville, le bracelet ou le bracelet de poignet porté par ladite personne spécifique,
b. la détermination (220) de la position desdites une ou plusieurs personnes avec ledit bracelet de cheville, bracelet ou bracelet de poignet respectif,
c. la détermination (230) de la position relative desdits un ou plusieurs outils associés à chaque personne par rapport à cette personne afin d'enregistrer l'activité de chaque personne, et
d. l'envoi (240) de la position de chaque personne en combinaison avec la position relative des outils utilisés par cette personne à un serveur central, de sorte que les activités de cette personne sont suivies et gérées,
dans lequel ladite détermination (230) de ladite position relative de chaque outil est commencée lors de ladite association.

11. Procédé selon la revendication 10, dans lequel ladite association (210) comprend l'exécution d'une authentification mutuelle.

12. Procédé selon la revendication 10 ou la revendication 11, dans lequel des transmissions entre le serveur, le bracelet de cheville, le bracelet, ou le bracelet de poignet et l'outil sont chiffrées.

13. Procédé selon l'une quelconque des revendications 10 à 12, dans lequel la position et le mouvement du ou des plusieurs outils associés à chaque personne sont également enregistrés.

14. Procédé selon l'une quelconque des revendications 10 à 13, dans lequel la position relative est déterminée (230) en utilisant une estime déduite (navigation à l'estime).

15. Procédé selon l'une quelconque des revendications 10 à 14, dans lequel une reconnaissance de formes est appliquée sur les données d'activité afin de reconnaître des activités.

16. Procédé selon l'une quelconque des revendications 10 à 15, dans lequel l'attitude du ou des plusieurs outils est déterminée et envoyée au serveur central (100).

17. Procédé selon l'une quelconque des revendications 10 à 16, dans lequel les mesures du ou des plusieurs capteurs dans l'outil et/ou le bracelet de cheville, le bracelet ou le bracelet de poignet sont combinées (fusion des données des capteurs) et filtrées en utilisant un ou plusieurs filtres de Kalman.

18. Utilisation du procédé selon l'une quelconque des revendications 10 à 17, pour suivre et gérer des activités et des tâches de prisonniers ou de personnes qui doivent effectuer des travaux d'intérêt général.
